# EUROPÄISCHE PATENTANMELDUNG

(11) **EP 1 975 581 A1**
(43) Veröffentlichungstag der Anmeldung: **01.10.2008**
(21) Anmeldenummer: 07005952.2
(22) Anmeldetag: 22.03.2007
(51) Int. Cl.: G01K 11/20, C23C 28/00, C23C 28/04, C23C 30/00, F01D 5/28, F01D 21/00

(54) **Keramische Wärmedämmbeschichtung, insbesondere für ein Turbinenbauteil, sowie Vorrichtung und Verfahren zum Ermitteln der Temperatur eines Turbinenbauteils.**

(71) Anmelder: SIEMENS AKTIENGESELLSCHAFT, 80333 München (DE)
(72) Erfinder: Schumann, Eckart, Dr., 45468 Mülheim an der Ruhr (DE); Subramanian, Ramesh, Dr., 10777 Berlin (DE); Wessler, Berit, Dr., 82024 Taufkirchen (DE)

(57) **Zusammenfassung**

Es wird eine Keramische Wärmedämmbeschichtung zur Verfügung gestellt, welche mindestens eine Wärmedämmschicht und eine einen thermographischen Leuchtstoff enthaltende Leuchtstoffschicht umfasst. Der thermographische Leuchtstoff ist ausgewählt aus der Gruppe: YAG:Tm, YSZ:Dy, GZO:Dy, GZO:Tm, YAG:Sm, EZO.

## Beschreibung

Die vorliegende Erfindung betrifft eine keramische Wärmedämmbeschichtung, ein Turbinenbauteil mit einer keramischen Wärmedämmbeschichtung, die Verwendung eines Materials als Wärmedämmbeschichtung sowie eine Vorrichtung und ein Verfahren zum Messen der Temperatur eines mit einer einen thermographischen Leuchtstoff umfassenden keramischen Wärmedämmbeschichtung beschichteten Turbinenbauteils.

Auf dem Weg zu einer ressourcen- und umweltschonenden Energieerzeugung spielt die Effizienzsteigerung eine zentrale Rolle. So ist bis zum Jahr 2025 eine Steigerung des Gesamtwirkungsgrades von Kombikraftwerken (Kombination aus Gasturbinenkraftwerk und Dampfturbinenkraftwerk) auf über 60% anvisiert. Um dieses Ziel verwirklichen zu können, muss die Effizienz der Gasturbinen gesteigert werden.

Ein wichtiger Parameter für die Effizienzsteigerung von Gasturbinen ist die Turbineneintrittstemperatur. Der derzeitige Wirkungsgrad einer Gasturbine von ca. 38% kann mit einer Turbineneintrittstemperatur von 1230°C (ISO) erreicht werden. Eine Effizienzsteigerung der Gasturbine würde eine Erhöhung der Turbineneintrittstemperatur erfordern. Um beispielsweise den Wirkungsgrad einer Gasturbine auf 45% zu steigern, würde eine Erhöhung der Turbineneintrittstemperatur auf ca. 1350°C notwendig sein.

Neben der Verwendung verbesserter Grundwerkstoffe und effektiver Kühlungsmethoden stellt der Einsatz von keramischen Wärmedämmschichten eine Schlüsseltechnologie zum Erreichen dieses Zieles dar. Aufgrund der thermisch isolierenden Wirkung der keramischen Wärmedämmschicht kann die Oberfläche des beschichteten Bauteils einer Temperatur ausgesetzt werden, die um einige 100°C höher liegt, als dies ohne die Wärmedämmschicht möglich wäre, ohne dass die Kühlungsbedingungen des Bauteils geändert werden müssten. Voraussetzung für den effizienten Einsatz keramischer Wärmedämmschichten (im Folgenden auch TBC, Thermal Barrier Coating, abgekürzt) in Gasturbinen ist neben einer kostengünstigen Prozesstechnologie vor allem die strukturelle Stabilität und damit die Zuverlässigkeit der TBC unter den in Gasturbinen herrschenden Einsatzbedingungen. So muss für Gasturbinen im Bereich von Kraftwerksanwendungen eine störungsfreie Funktion über 20000 so genannte äquivalente Betriebsstunden und mehr sichergestellt werden. Ein vorzeitiges Versagen der TBC würde in der Folge zur Überhitzung des Grundwerkstoffes der beschichteten Turbinenbauteile und möglicherweise zu einem katastrophalen Turbinenschaden führen. Die durch einen Turbinenschaden verursachten Betriebsausfall- und Instandsetzungskosten können erheblich sein und würden letztlich den technologischen Nutzen der TBC aufheben.

In zukünftigen Generationen hocheffizienter Gasturbinen wird man sich immer weiter den Belastungsgrenzen der TBC annähern. Um das Ausfallrisiko durch diese Annäherung nicht unkontrolliert zu steigern, müssen die für das Versagen der TBC kritischen Belastungsparameter beim Betrieb gemessen und kontrolliert werden. Wichtige Belastungsparameter sind in diesem Zusammenhang die Oberflächentemperatur der TBC an kritischen Bauteilpositionen, so genannten Hot Spots, sowie die Zeitabhängigkeit der Oberflächentemperatur. Letztere ist insbesondere für die Übergänge zwischen verschiedenen Betriebszuständen der Gasturbine, etwa beim Anfahren der Gasturbine, von Bedeutung.

Bereits heute werden Pyrometer und Wärmebildkameras zum Messen der Oberflächentemperatur von Leitschaufeln in Gasturbinen eingesetzt. Dabei wird die von der TBC-Oberfläche in einem bestimmten Wellenlängenbereich, beispielsweise im Infrarot oder im nahen Infrarot, emittierte Strahlung detektiert und unter Berücksichtigung der Emissivität sowie der Detektorempfindlichkeit in eine äquivalente Oberflächentemperatur der TBC umgerechnet. Schwierigkeiten bereitet dabei die zumeist unzureichende Kenntnis der wellenlängenabhängigen Emissivität der TBC-Oberfläche, die unter anderem durch Ablagerungen auf der TBC-Oberfläche (beispielsweise Rost) empfindlich beeinflusst werden kann.

Eine weitere Möglichkeit zur Messung von Oberflächentemperaturen besteht in der Verwendung thermographischer Leuchtstoffe. Eine Wärmedämmschicht mit einem eingebetteten thermographischen Indikatorwerkstoff und ein Verfahren zum Ermitteln der Temperatur der Wärmedämmschicht sind beispielsweise in EP 1 105 550 B1 beschrieben. Zum Ermitteln der Temperatur der Wärmedämmschicht wird der Indikatorwerkstoff mittels eines gepulsten Lasers zum Fluoreszieren angeregt. Nach dem Abschalten des Anregungsimpulses fällt die Intensität des Fluoreszenzspektrums mit einer charakteristischen Zeitkonstante t exponentiell ab. So zeigt beispielsweise mit Terbium (Tb) dotiertes Yttrium Aluminium Garnet (YAG:Tb) zwischen 700 und 1000 °C eine monotone Abnahme der charakteristischen Zeitkonstante t. Anhand einer Messung der Zeitkonstante kann die Temperatur des Indikatorwerkstoffes und damit der Wärmedämmschicht, in die er eingebettet ist, festgestellt werden, sofern eine geeignete Kalibrierung vorgenommen wurde. Unter Umständen können verschiedene Linien des Emissionsspektrums unterschiedliche Abklingkonstanten besitzen, die auch unterschiedliche Temperaturabhängigkeiten aufweisen können. Neben YAG:Tb sind in EP 1 105 550 auch mit Dysprosium (Dy) dotiertes Yttrium Aluminium Garnet (YAG:Dy) sowie mit Yttrium stabilisiertes Zirkonoxid (YSZ) mit einem oder mehreren Seltenerdelementen genannt.

Statt des zeitlichen Abklingverhaltens der Emissionsintensität des Indikatorwerkstoffes kann auch das Intensitätsverhältnis zweier Emissionswellenlängen zum Ermitteln der Temperatur des Indikatorwerkstoffes, und damit der Temperatur der Wärmedämmschicht, herangezogen werden. Das Intensitätsverhältnis hängt näherungsweise linear von der Temperatur des Indikatorwerkstoffes - d.h. von der Temperatur der Wärmedämmschicht, in die der Indikatorwerkstoff eingebettet ist - ab. Das Messen der Temperatur über das Intensitätsverhältnis ist ebenfalls in EP 1 105 550 B1 beschrieben.

Der Vorteil beim Verwenden von Messmethoden, die auf thermographischen Leuchtstoffen beruhen, liegt in der Unabhängigkeit von der meist nur unzureichend bekannten Emissivität der TBC sowie der Unabhängigkeit vom Einfluss von Oberflächenverunreinigungen, welche oft die Eigenschaft der TBC als Wärmestrahler beeinflussen. Die spezifischen Eigenschaften des Emissionsspektrums des Leuchtstoffes werden dagegen durch die Emissivität und die Oberflächenverunreinigungen nur wenig beeinflusst.

Grenzen der Temperaturmessung mittels Emissionsspektren thermographischer Leuchtstoffe setzen die Beschränkung der Temperatursensibilität der Leuchtstoffe auf jeweils einen bestimmten Temperaturbereich sowie die limitierte Langzeitstabilität eines thermographischen Leuchtstoffes unter den thermischen und atmosphärischen Bedingungen einer Gasturbine.

Eine erste Aufgabe der vorliegenden Erfindung ist es, eine keramische Wärmedämmbeschichtung mit vorteilhaften photoluminiszenten Eigenschaften sowie ein vorteilhaftes Turbinenbauteil und eine vorteilhafte Verwendung verschiedener Materialien zur Verfügung zu stellen.

Es ist eine zweite Aufgabe der vorliegenden Erfindung, eine Vorrichtung zum Messen der Temperatur eines mit einer einen thermographischen Leuchtstoff umfassenden keramischen Wärmedämmbeschichtung beschichteten Turbinenbauteils zur Verfügung zu stellen.

Eine dritte Aufgabe der vorliegenden Erfindung ist es, ein Verfahren zum Ermitteln der Temperatur eines Turbinenbauteils mit einer einen thermographischen Leuchtstoff umfassenden keramischen Wärmedämmbeschichtung zur Verfügung zu stellen.

Die erste Aufgabe wird durch eine keramische Wärmedämmbeschichtung nach Anspruch 1 bzw. die Verwendung von EZO (Europiumzirkonimumoxid, Eu₂Zr₂O₇), von mit Thulium dotiertem Yttrium-Aluminium-Granat (YAG:Tm), von mit Europium dotiertem Yttrium-Aluminium-Granat (YAG:EU), von mit Dysprosium dotiertem Zirkonoxid, welches mit Yttrium stabilisiert ist (YSZ:Dy), von mit Dysprosium dotiertem Gadoliniumzirkonat (GZO:Dy), von mit Thulium dotiertem Gadoliniumzirkonat (GZO:Tm) oder von mit Samarium dotiertem Yttrium-Aluminium-Granat (YAG:Sm) nach Anspruch 7 gelöst.

Die zweite Aufgabe wird durch eine Vorrichtung zum Messen der Temperatur eines mit einer keramischen Wärmedämmbeschichtung beschichteten Turbinenbauteils gemäß Anspruch 8 gelöst.

Die dritte Aufgabe wird durch ein Verfahren zum Ermitteln der Temperatur eines Turbinenbauteils mit einer keramischen Wärmedämmbeschichtung gemäß Anspruch 16 gelöst.

Die abhängigen Ansprüche enthalten vorteilhafte Ausgestaltungen der Erfindung.

Eine erfindungsgemäße keramische Wärmedämmbeschichtung umfasst mindestens eine Wärmedämmschicht und eine Leuchtstoffschicht, die einen thermographischen Leuchtstoff enthält. Als thermographischer Leuchtstoff findet ein Stoff Verwendung, der aus der Gruppe ausgewählt ist, welche besteht aus: EZO, YAG:Tm, YAG:EU, YSZ:Dy, GZO:Dy, GZO:Tm und YAG:Sm. Die Erfindung offenbart daher auch die Verwendung dieser Stoffe zum Herstellen einer thermographischen Leuchtstoffschicht in einer Wärmedämmbeschichtung.

In einer derartigen keramischen Wärmedämmbeschichtung ermöglicht es der thermographische Leuchtstoff, eine Messung der Temperatur der Beschichtung vorzunehmen, indem die Beschichtung mit Laserstrahlung bestrahlt wird, welche Fluoreszenz des thermographischen Leuchtstoffes anregt. Für den Einsatz zum Messen der Temperatur über das Abklingverhalten der Fluoreszenzstrahlung bedeutsame Parameter des thermographischen Leuchtstoffes sind die Hochtemperaturstabilität des Leuchtstoffes sowie die Temperaturabhängigkeit im Abklingverhalten der Fluoreszenzstrahlung oder im Intensitätsverhältnis zweier Emissionslinien. Im Allgemeinen ist hier eine hohe Temperaturabhängigkeit im Abklingverhalten bzw. Intensitätsverhältnis erwünscht. Daneben kann auch die nutzbare Abklingzeit nach Anregung mittels eines Laserpulses eine bedeutsame Rolle spielen, beispielsweise wenn die erfindungsgemäße Beschichtung auf einer Turbinenschaufel zur Anwendung kommen soll. Aufgrund der hohen Rotationsgeschwindigkeit der Turbine steht nach dem Anregen des thermographischen Leuchtstoffes nur ein sehr kurzer Zeitraum zum Messen des Abklingverhaltens zur Verfügung, bevor die Turbinenschaufel aus dem Erfassungsbereich des Detektors verschwindet und durch eine andere Schaufel ersetzt wird. In dem zur Verfügung stehenden Zeitfenster muss das Messen des Abklingverhaltens hinreichend genau möglich sein, d.h. die Abklingzeit muss kurz genug sein, um ein Abklingen der Intensität innerhalb des Zeitfensters messen zu können. Die erfindungsgemäß als thermographische Leuchtstoffe Verwendung findenden Materialien erfüllen die Voraussetzungen für den Einsatz in Gasturbinen. Insbesondere YAG:Tm und GZO:Tm weisen sehr kurze Abklingzeiten bei hohen und höchsten Intensitäten bei Anregung mit Strahlung der Wellenlänge 354 nm auf.

Die Leuchtstoffschicht kann in der erfindungsgemäßen keramischen Wärmedämmbeschichtung über der Wärmedämmschicht und insbesondere als oberste Schicht der keramischen Wärmedämmbeschichtung, unter der Wärmedämmschicht oder, bei Vorhandensein von zwei Wärmedämmschichten zwischen beiden Wärmedämmschichten angeordnet sein. Geeignete Materialien für die Wärmedämmschicht bzw. Wärmedämmschichten sind Zirkonoxid, welches mit Yttrium zumindest teilstabilisiert ist, Gadoliniumzirkonat (GZO) oder Gadoliniumhafnat (GHO). Falls mehrere Wärmedämmschichten vorhanden sind, können diese jeweils aus dem gleichen Material bestehen oder aus verschiedenen Materialien.

Ein erfindungsgemäßes Turbinenbauteil ist mit einer erfindungsgemäßen keramischen Wärmedämmbeschichtung beschichtet.

Eine erfindungsgemäße Vorrichtung zum Messen der Temperatur eines mit einer einen thermographischen Leuchtstoff umfassenden keramischen Wärmedämmbeschichtung beschichteten Turbinenbauteils umfasst eine Strahlungsquelle, die derart ausgestaltet ist, dass sie eine Anregungsstrahlung aussenden kann, eine Einrichtung zum Leiten der von der Strahlungsquelle ausgesandten Anregungsstrahlung zum Turbinenbauteil, einen Detektor und eine Auswerteeinheit. Weiterhin umfasst die erfindungsgemäße Vorrichtung eine Positioniereinrichtung zum Positionieren der Anregungsstrahlung auf der Oberfläche des Turbinenbauteils. Die Strahlungsquelle ist derart ausgestaltet, dass sie geeignet ist, den thermographischen Leuchtstoff in der Wärmedämmbeschichtung des Turbinenbauteils zum Emittieren einer mit einer temperaturabhängigen Abklingzeit abklingenden Emissionsstrahlung anzuregen. Die Anregungsstrahlung und die Emissionsstrahlung können hierbei insbesondere in verschiedenen Wellenlängenbereichen des Spektrums liegen. Der Detektor ist dazu ausgebildet, die von dem thermographischen Leuchtstoff in der Wärmedämmbeschichtung ausgehende Emissionsstrahlung zu detektieren. Er kann insbesondere einen Photomultiplier, eine CCD-Kamera oder eine CMOS-Kamera aufweisen. Die Auswerteeinheit ist dazu ausgestaltet, aus dem Abklingverhalten der detektierten Emissionsstrahlung die Temperatur des mit der Anregungsstrahlung bestrahlten Bereiches der Wärmedämmbeschichtung zu ermitteln.

Die erfindungsgemäße Vorrichtung ermöglicht es, gezielt Bereiche der keramischen Wärmedämmbeschichtung mit Anregungsstrahlung anzuregen und die Abklingzeit der aus der Anregung resultierenden Emissionsstrahlung des thermographischen Leuchtstoffes auszuwerten und daraus die Temperatur der angeregten Stelle der keramischen Wärmedämmbeschichtung zu ermitteln. Das Auswählen einer geeigneten Stelle erfolgt dabei mit Hilfe der Positioniereinrichtung, die beispielsweise durch einen oder mehrere bewegliche Spiegel realisiert sein kann. Die Positioniereinrichtung ermöglicht es insbesondere, einzelne, thermisch besonders hoch belastete Bereiche des Turbinenbauteils zu scannen. Wenn das Turbinenbauteil eine zusammen mit einem Rotor rotierende Turbinenschaufel ist, besteht so beispielsweise die Möglichkeit in aufeinander folgenden Umdrehungen des Rotors verschiedene Bereiche ein und derselben Turbinenschaufel auf ihre Temperatur zu untersuchen.

Als Strahlungsquelle eignet sich insbesondere ein Laser, da mit diesem eine besonders hohe Intensität der Anregungsstrahlung erzielt werden kann. Bei Verwendung eines Festkörperlasers besteht zudem die Möglichkeit, den Laser klein zu halten, und so die gesamte Vorrichtung transportabel auszugestalten.

Als Einrichtung zum Leiten der von der Strahlungsquelle ausgesandten Anregungsstrahlung zum Turbinenbauteil kann eine Lichtleitfaser Verwendung finden. Diese ermöglicht das Leiten der Anregungsstrahlung weitgehend verlustfrei in die Nähe des Bauteils. Statt einer einzelnen Faser kann hierbei auch ein Lichtleitfaserbündel Verwendung finden, was es ermöglichen würde, mit den einzelnen Fasern unterschiedliche Stellen des Bauteils zu bestrahlen. Das Lichtleitfaserbündel könnte dann auch die Positioniereinrichtung zum Positionieren der Anregungsstrahlung bilden. Außerdem kann die Vorrichtung auch eine zusätzliche Lichtleitfaser oder ein zusätzliches Lichtleitfaserbündel umfassen, das derart angeordnet ist, dass es in die zusätzliche Lichtleitfaser bzw. in das zusätzliche Lichtleitfaserbündel eintretende Strahlung zum Detektor leitet. Auf diese Weise kann die Emissionsstrahlung ohne größere Verluste zum Detektor geleitet werden. Die Verwendung von Lichtleitfasern oder Lichtleitfaserbündeln vereinfacht zudem den Aufbau der Vorrichtung, da die Anzahl beweglicher Teile gegenüber dem Spiegelsystem reduziert ist und keine so aufwendige Justierung wie bei der Verwendung von Spiegeln und anderer optischer Komponenten zum Leiten der Anregungsstrahlung und/oder der Emissionsstrahlung nötig ist.

Im erfindungsgemäßen Verfahren zum Ermitteln der Temperatur eines Turbinenbauteils mit einer einen thermographischen Leuchtstoff umfassenden keramischen Wärmedämmbeschichtung wird die Wärmedämmbeschichtung mit einer Anregungsstrahlung bestrahlt, die geeignet ist, den thermographischen Leuchtstoff in der Wärmedämmbeschichtung zum Emittieren einer mit einer bestimmten temperaturabhängigen Abklingzeit abklingenden Emissionsstrahlung anzuregen. Die Anregungsstrahlung und die Emissionsstrahlung können dabei in verschiedenen Bereichen des Spektrums liegen. Die vom thermographischen Leuchtstoff emittierte Emissionsstrahlung wird detektiert und im Hinblick auf ihr zeitliches Abklingverhalten analysiert. Aus dem Abklingverhalten wird dann die Temperatur des mit der Anregungsstrahlung bestrahlten Bereiches des Turbinenbauteils ermittelt. In dem erfindungsgemäßen Verfahren wird die Oberfläche der Wärmedämmbeschichtung mit der Anregungsstrahlung gescannt. Das Scannen ermöglicht es, die Temperatur der keramischen Wärmedämmbeschichtung ortsaufgelöst zu ermitteln. Auf diese Weise können Hotspots in der Beschichtung besonders zuverlässig gefunden werden.

Wenn das Turbinenbauteil eine Turbinenschaufel ist, die Teil eines rotierenden Rotors ist, kann das Scannen so erfolgen, dass in einer Anzahl aufeinander folgender Rotationsperioden jeweils verschiedene Oberflächenbereiche angeregt werden. Je nach Geschwindigkeit des Scannsystems besteht aber auch die Möglichkeit innerhalb einer einzigen Rotationsperiode mehr als ein Oberflächenbereich abzuscannen. Falls das Scannsystem im Verhältnis zur Abklingzeit des Leuchtstoffes jedoch sehr langsam sein sollte, besteht auch die Möglichkeit, nur nach jeder n-ten Rotation eine Anregung in einem bestimmten Oberflächenbereich vorzunehmen.

Das Bestrahlen der Wärmedämmbeschichtung mit der Anregungsstrahlung erfolgt insbesondere gepulst, sodass zwischen den Pulsen die Emissionsstrahlung des thermographischen Leuchtstoffes ohne Störung durch die intensive Anregungsstrahlung detektiert werden kann.

Als Anregungsstrahlung für die eingangs genannten thermographischen Leuchtstoffe eignet sich Anregungsstrahlung im ultravioletten Wellenlängenbereich.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Fig. 1: zeigt eine erfindungsgemäße Vorrichtung zum Messen der Temperatur der Beschichtung eines Turbinenbauteils, das mit einer einen thermographischen Leuchtstoff umfassenden keramischen Wärmedämmbeschichtung Beschichtung beschichtet ist.
- Fig. 2: zeigt ein Detail aus Fig. 1.
- Fig. 3: zeigt ein weiteres Detail aus Fig. 1.
- Fig. 4: zeigt das Abklingverhalten der Fluoreszenz eines beispielhaften thermographischen Leuchtstoffes als Funktion seiner Temperatur.
- Fig. 5: zeigt ein erstes Beispiel für den Aufbau einer erfindungsgemäßen keramischen Wärmedämmbeschichtung.
- Fig. 6: zeigt ein zweites Ausführungsbeispiel für den Aufbau einer erfindungsgemäßen keramischen Wärmedämmbeschichtung.
- Fig. 7: zeigt ein drittes Ausführungsbeispiel für den Aufbau einer erfindungsgemäßen keramischen Wärmedämmbeschichtung.
- Fig. 8: zeigt beispielhaft eine Gasturbine in einem Längsteilschnitt.
- Fig. 9: zeigt in perspektivischer Ansicht eine Laufschaufel 120 oder Leitschaufel einer Strömungsmaschine, die sich entlang einer Längsachse erstreckt.
- Fig. 10: zeigt eine Brennkammer der Gasturbine.

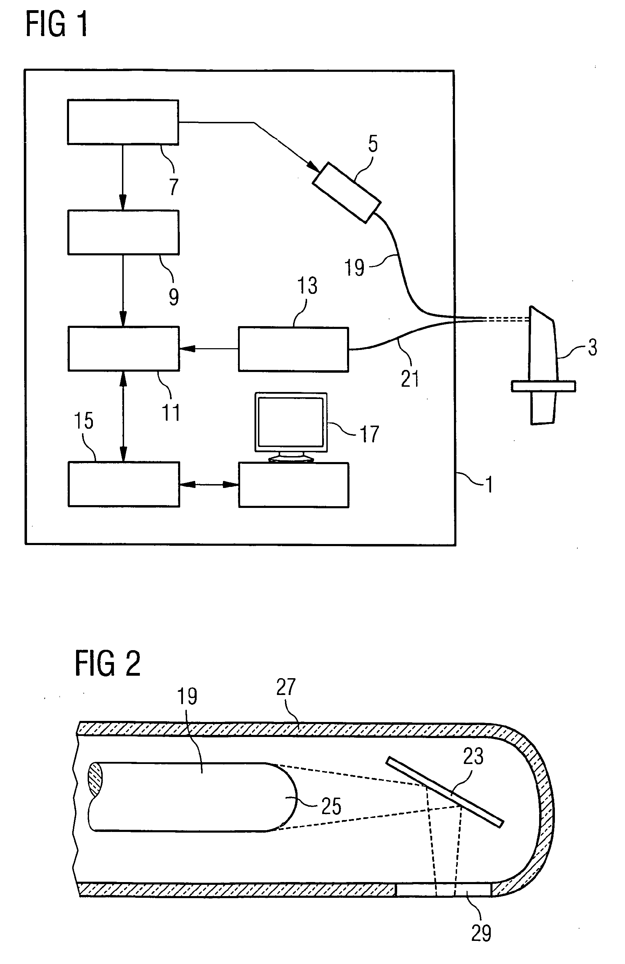

Ein Ausführungsbeispiel für die erfindungsgemäße Vorrichtung zum Messen der Temperatur eines Turbinenbauteils, welches mit einer einen thermographischen Leuchtstoff umfassenden Wärmedämmbeschichtung beschichtet ist, ist in Fig. 1 stark schematisiert dargestellt. Die Figur zeigt neben der erfindungsgemäßen Vorrichtung, die als Blockdiagramm dargestellt und mit der Bezugsziffer 1 bezeichnet ist, eine Turbinenschaufel 3, die für die Beschreibung des vorliegenden Ausführungsbeispiels als Turbinenbauteil, an dem die Temperatur der Beschichtung zu messen ist, fungiert.

Die Vorrichtung 1 zum Messen der Temperatur der Beschichtung umfasst einen Neodym:YAG-Laser 5, einen Pulsfunktionsgenerator 7, einen Gate-Impulsgeber mit Verzögerungsschaltung 9, ein Photodiodenfeld 11, einen Monochromator 13, einen A/D-Wandler 15 sowie einen Rechner 17 als Auswerteeinheit. Statt des im vorliegenden Ausführungsbeispiel gewählten Photodiodenfeldes können alternativ auch andere Detektoren für die Emissionsstrahlung zur Anwendung kommen, bspw. ein CCD-Chip oder ein Photomultiplier. Ebenso kann die Auswerteeinheit grundsätzlich auch alternativ ausgeführt sein, bspw. in Form eines Oszilloskops.

Der Nd:YAG-Laser 5 dient dazu, Anregungsstrahlung zum Anregen einer Luminiszenz eines thermographischen Leuchtstoffes in der Beschichtung der Turbinenschaufel 3 zur Verfügung zu stellen. Die Anregungsstrahlung wird über eine erste Lichtleitfaser 19 zur Turbinenschaufel 3 geleitet und auf deren Oberfläche abgestrahlt. Im vorliegenden Ausführungsbeispiel kommt mit Thulium dotiertes Yttriumaluminiumgranat (YAG) als thermographischer Leuchtstoff zur Anwendung. Dieser Leuchtstoff zeigt eine hohe Intensität in der Luminiszenz bei einer Anregung mit einer Laserwellenlänge von 354 nm. Ein Nd:YAG-Laser 5 ist jedoch ein Halbleiterlaser, der einen mit Neodym dotierten YAG-Kristall als laseraktives Medium verwendet. Dieser emittiert infrarote Strahlung mit einer Wellenlänge von 1064 nm. Um die Wellenlänge von 354 nm zu erreichen ist dem Laser 5 daher ein Frequenzverdreifacher (nicht dargestellt) zugeordnet. Alternativ kann dem Laser auch ein Frequenzvervierfacher zugeordnet sein, so dass eine Wellenlänge von 266 nm erreicht wird.

Der Laser 5 wird gepulst betrieben. So kann zwischen den Pulsen die Emissionsstrahlung des durch die Laserpulse angeregten thermographischen Leuchtstoffes detektiert werden, ohne dass die Detektion durch die sehr viel intensivere Laserstrahlung beeinträchtigt werden würde. Die Messung der Abklingzeit aus der detektierten Emissionsstrahlung erfolgt nach der Anregung. Daher hat der Laser eine im Vergleich zur Abklingzeit der Emissionsstrahlung(im Bereich von µs) kurze Pulsdauer (im Bereich von ns). Die Pulsfunktion, d.h. die Form und die Zeitdauer der Pulse, wird durch den Pulsfunktionsgenerator 7 vorgegeben und an den Laser 5 ausgegeben. Zudem wird die Pulsfunktion auch an den Gate-Impulsgeber mit Verzögerungsschaltung 9 ausgegeben, welcher auf der Basis der Pulsfunktion das Photodiodenfeld 11 geeignet ansteuert.

Das auf die Anregung mit der Laserstrahlung hin emittierte Lumineszenzlicht, also die Emissionsstrahlung des thermographischen Leuchtstoffes, wird von einer zweiten Lichtleitfaser 21 aufgenommen und einem Monochromator 13 zugeführt, welcher aus dem aufgenommenen Spektrum die Wellenlänge der Emissionsstrahlung aussondert und dem Photodiodenfeld 11 zuführt. Im Photodiodenfeld erzeugt die auftreffende monochromatisierte Strahlung einen Stromfluss, der dem A/D-Wandler 15 zugeführt wird, wo er in ein digitales Signal umgewandelt wird, welches anschließend zum Auswerten an den Rechner 17 weitergeleitet wird.

Zum Ermitteln der Temperatur der keramischen Wärmedämmbeschichtung auf dem Turbinenbauteil 3 wird diese mit der Anregungsstrahlung des Nd:YAG-Lasers 5 bestrahlt und die Emissionsstrahlung 9 des in der keramischen Wärmedämmbeschichtung enthaltenen thermographischen Leuchtstoffes aufgenommen. Die Verzögerungsschaltung im Gate-Impulsgenerator mit Verzögerungsschaltung sorgt dabei dafür, dass die Intensität der Emissionsstrahlung erst nach Ablauf einer bestimmten Verzögerungszeit tᵥ nach der Anregung aufgenommen wird. Die vom Gate-Impulsgenerator erzeugten Pulse dienen dabei als Trigger zum Auslösen der Aufnahme. Aus der Intensität nach Ablauf der Verzögerungszeit tᵥ und der charakteristischen Abklingzeit der Emission wird dann auf die Temperatur des thermographischen Leuchtstoffes und damit der Wärmedämmbeschichtung, in die dieser eingebettet ist, geschlossen. Grundsätzlich kann das Abklingverhalten aber auch durch eine zeitaufgelöste Messung der Intensität der Emissionsstrahlung ermittelt werden.

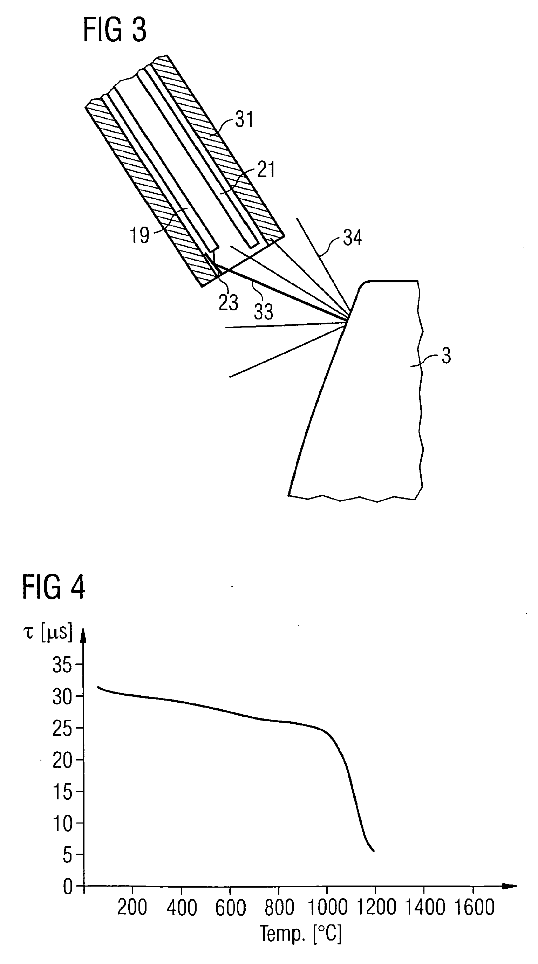

Fig. 4 zeigt die charakteristische Abklingzeit eines thermographischen Leuchtstoffes als Funktion seiner Temperatur am Beispiel von Yttriumaluminiumgranat, das mit Thulium dotiert ist (YAG:Tm). Bis zu einer Temperatur von etwa 800°C liegt die Abklingzeit in einem Bereich zwischen 25 und 35 Mikrosekunden. Oberhalb ca. 850°C fällt die charakteristische Abklingzeit der Emission stark ab und beträgt bei ca. 1100°C weniger als 10 Mikrosekunden. Da sich im Bereich oberhalb ca. 800°C die charakteristische Abklingzeit mit der Temperatur sehr stark ändert, kann insbesondere in diesem Bereich über eine Messung der charakteristischen Abklingzeit bzw. der Intensität der Emissionsstrahlung nach einer bestimmten Verzögerungszeit tᵥ die Temperatur des thermographischen Leuchtstoffes und damit der keramischen Wärmedämmbeschichtung gut bestimmt werden. Andere Materialien zeigen ein grundsätzlich ähnliches Verhalten der Abklingzeit als Funktion der Temperatur, jedoch kann der Bereich, in dem sich die Abklingzeit stark mit der Temperatur ändert, gegenüber dem in Fig. 4 dargestellten Temperaturbereich variieren. So zeigt beispielsweise mit Dysprosium dotiertes Zirkonoxid, welches mit Yttrium stabilisiert ist (YSZ:Dy), bereits bei Temperaturen oberhalb ca. 500°C eine starke Temperaturabhängigkeit in den charakteristischen Abklingzeiten.

Um den Laserstrahl auf bestimmte Oberflächenbereiche der Turbinenschaufel 3 lenken zu können, ist im Bereich des Austrittsendes der Lichtleitfaser 19 für die Anregungsstrahlung ein einstellbares Spiegelsystem angeordnet (vgl. Fig. 2). Das Spiegelsystem umfasst einen um zwei Achsen präzise drehbaren Spiegel 23, der so im Bereich des Austrittsendes 25 der Lichtleitfaser 19 angeordnet ist, dass die aus der Lichtleitfaser 19 austretende Strahlung auf die verspiegelte Oberfläche des Spiegels 23 trifft. Zum Fokussieren der Laserstrahlung ist das Austrittsende 25 der Lichtleitfaser 19 im vorliegenden Ausführungsbeispiel in Form einer konvexen Linse geschliffen. Das Austrittsende 25 der Lichtleitfaser 19 und der Spiegel 23 sind zu ihrem Schutz in einer Röhre 27 angeordnet, die ein transparentes Fenster 29 zum Durchtritt der vom Spiegel 23 abgelenkten Anregungsstrahlung aufweist. Mit Hilfe des um zwei Achsen beweglichen Spiegels 23 kann die Oberfläche der Turbinenschaufel 3 mit der Anregungsstrahlung gescannt werden. Dies ermöglicht es, bestimmte Oberflächenbereiche der keramischen Wärmedämmschicht gezielt auf ihre Temperatur zu untersuchen. Statt eines um zwei Achsen drehbaren Spiegels können auch zwei Spiegel vorhanden sein, die jeweils um eine Achse drehbar sind, wobei die beiden Achsen nicht parallel zueinander verlaufen und vorzugsweise Senkrecht aufeinander stehen.

Statt einer einzelnen Lichtleitfaser und einem beweglichen Spiegel 23 kann grundsätzlich aber auch ein Lichtleitfaserbündel dazu verwendet werden, die Anregungsstrahlung zur Turbinenschaufel 3 zu leiten. Die einzelnen Lichtleitfasern eines solchen Bündels könnte dann auf verschiedene Oberflächenbereiche der Turbinenschaufel 3 gerichtet werden. Ein Lichtleitfaserbündel ist insbesondere in Verbindung mit einem CCD-Chip (CCD: charge coupled device) oder einem CMOS-Kamerachip sinnvoll, da sie das Aufnehmen eines Bildes der Turbinenschaufel ermöglichen. Ein gerastetes Bild kann beispielsweise dadurch erzeugt werden, dass das Lichtleitfaserbündel geordnete Fasern aufweist, d.h. die Anordnung der Eintrittsenden der Lichtleitfasern entspricht der Anordnung der Austrittsenden, sodass die Austrittsenden als Pixel eines Bildes angesehen werden können.

Die Lichtleitfasern 19 und 21 können beispielsweise über ein radiales Sichtrohr im Bereich der Turbine in die Nähe der Turbinenschaufeln 3 gebracht werden. Ein radiales Sichtrohr 31 und eine Turbinenschaufel 3 sind in Fig. 3 schematisch dargestellt.

Im radialen Sichtrohr sind einerseits die Lichtleitfasern 19 zum Zuleiten der Anregungsstrahlung zusammen mit dem Spiegelsystem 23 und andererseits die Lichtleitfaser 21 zum Aufnehmen der Emissionsstrahlung des thermographischen Leuchtstoffes angeordnet. Zwischen zwei Laserpulsen (ein Laserpuls ist in Fig. 3 mit der Bezugsziffer 33 ausgedeutet) kann die Emissionsstrahlung 35 des thermographischen Leuchtstoffes also seine Luminiszenzstrahlung mittels der Lichtleitfaser 21 ausgenommen und dem Monochromator 13 zugeleitet werden.

Da sich die Turbinenschaufel 3 während des Betriebs der Gasturbine mit hoher Geschwindigkeit dreht, ist die Pulsdauer und der Abstand zwischen zwei Pulsen der Anregungsstrahlung 33 so kurz gewählt, dass sowohl die Anregung der Luminiszenz als auch das Detektieren der Luminiszenz in der Zeitspanne möglich ist, in der sich die Turbinenschaufel 3 im Sichtfeld des radialen Sichtrohres befindet. Falls die Spiegelanordnung 23 oder eine andere Scannvorrichtung sehr hohe Scannraten ermöglichen, können gegebenenfalls in der Zeit, in der sich die Turbinenschaufel 3 im Sichtfeld des Sichtrohres 31 befindet, sogar mehrere Oberflächenpunkte der keramischen Wärmedämmbeschichtung auf der Turbinenschaufel 3 auf ihre Temperatur hin untersucht werden. Auf jeden Fall sollte der Abstand zwischen zwei Anregungspulsen jedoch so groß sein, dass das Abklingverhalten der Luminiszenzstrahlung in der Zeitspanne zwischen zwei Laserpulsen hinreichend genau ermittelt werden kann.

Aufgrund des gepulsten Betriebs, d.h. des gepulsten Auslesens der Photodioden, repräsentiert die in jedem Ausleseschritt ausgelesene Stromstärke eine momentane Intensität der Emissionsstrahlung des thermographischen Leuchtstoffes. Das gepulste Auslesen der Photodioden im Photodiodenfeld 11 kann daher zu einer zeitaufgelösten Repräsentation der Emissionsintensität des thermographischen Leuchtstoffes führen. Das Signal wird dann im A/D-Wandler 15 in ein digitales Signal umgewandelt und dem Computer 17 zugeführt, wo daraus die charakteristische Abklingzeit der Emissionsstrahlung des thermographischen Leuchtstoffes ermittelt wird. Beispielsweise durch einen Vergleich der ermittelten Abklingzeit mit den Abklingzeiten, die der Kurve in Fig. 4 zu entnehmen sind, kann dann die Temperatur des thermographischen Leuchtstoffes ermittelt werden. Die Kurve aus Fig. 4 kann beispielsweise in Form einer Tabelle oder in Form einer mathematischen Beziehung im Computer gespeichert sein. Es ist aber auch möglich, aus dem bekannten Verlauf der Abklingzeit als Funktion der Temperatur die erwarteten Intensitäten der Emissionsstrahlung bei verschiedenen Temperaturen und einer bestimmten Verzögerungszeit tᵥ nach der Anregung zu berechnen und die berechneten Intensitäten mit der nach Ablauf der Verzögerungszeit tᵥ gemessenen Intensität zu vergleichen.

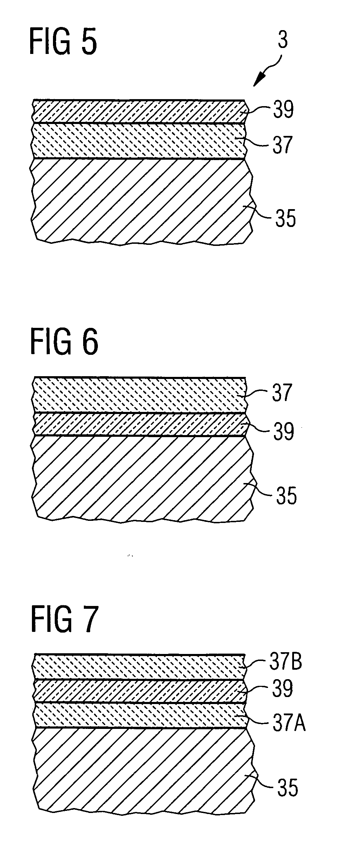

Die Anordnung des thermographischen Leuchtstoffes in der keramischen Wärmedämmbeschichtung des Turbinenbauteils wird nachfolgend mit Bezug auf die Figuren 5 bis 7 beschrieben. Die Figuren zeigen unterschiedliche Varianten der Anordnung des thermographischen Leuchtstoffes in der keramischen Wärmedämmbeschichtung.

Fig. 5 zeigt in einer stark schematisierten Darstellung die Turbinenschaufel 3, die mit einer erfindungsgemäßen keramischen Wärmedämmbeschichtung versehen ist. Die Turbinenschaufel 3 umfasst ein Substrat 35, welches entweder das Basismaterial der Turbinenschaufel sein kann oder eine Haftvermittlerschicht, beispielsweise eine so genannte MCrAlX-Beschichtung, die auf das Basismaterial der Turbinenschaufel 3 aufgebracht ist und später erläutert werden wird. Die MCrAlX-Beschichtung dient dann einerseits als Anbindungsschicht zum Anbinden der keramischen Wärmedämmbeschichtung an das Substratmaterial und andererseits als korrosions- und/oder oxidationshemmende Schicht. In den in den Figuren 5 bis 7 dargestellten Ausführungsvarianten ist keine MCrAlX-Beschichtung dargestellt. Vielmehr ist die keramische Wärmedämmbeschichtung direkt auf das Basismaterial 35 der Turbinenschaufel 3 aufgebracht.

In Fig. 5 umfasst die keramische Wärmedämmbeschichtung eine keramische Wärmedämmschicht 37 und eine den thermographischen Leuchtstoff enthaltende Leuchtstoffschicht 39. Diese kann selbst auch wärmedämmende Eigenschaften aufweisen. In dem in Fig. 5 dargestellten Ausführungsbeispiel ist die Wärmedämmschicht 37 direkt auf dem Substrat 35 angeordnet. Die Leuchtstoffschicht, welche den thermographischen Leuchtstoff enthält, ist auf die Wärmedämmschicht 37 aufgebracht und bildet die äußerste Schicht der Wärmedämmbeschichtung.

Als Wärmedämmschicht 37 kommen insbesondere YSZ-Schichten, GZO-Schichten und GHO-Schichten einzeln oder in Kombination in Frage. Entsprechende Materialien kommen auch als Materialien für die Leuchtstoffschicht in Betracht. Diese enthält jedoch auch den thermographischen Leuchtstoff, der ausgewählt ist aus der Gruppe: YAG:Tm, YAG:EU, YSZ:Dy, GZO:Dy, GZO:Tm, YAG:Sm und EZO. Insbesondere kann die Leuchtstoffschicht auch vollständig aus einem der genannten thermographischen Leuchtstoffe ausgebildet sein.

Eine zweite Ausführungsvariante der keramischen Wärmedämmbeschichtung ist in Fig. 6 dargestellt. Im Unterschied zur in Fig. 5 dargestellten Variante ist die thermographische Leuchtstoffschicht 39 direkt auf das Substrat 35 (oder gegebenenfalls auf eine MCrAlX-Beschichtung) aufgebracht. Über der thermographischen Leuchtstoffschicht 39 befindet sich die Wärmedämmschicht 37. Die Materialien, aus denen die Wärmedämmschicht 37 und die Leuchtstoffschicht 39 hergestellt sind, entsprechen denen, die mit Bezug auf Fig. 5 beschrieben worden sind.

Eine dritte Variante des Aufbaus der keramischen Wärmedämmbeschichtung ist in Fig. 7 dargestellt. Diese Variante entspricht einer Kombination der in den Figuren 5 und 6 dargestellten Varianten, in der sowohl über als auch unter der Leuchtstoffschicht 39 jeweils eine Wärmedämmschicht 37a, 37b angeordnet ist. Das mit Bezug auf die Materialien des Substrats 35, der Wärmedämmschicht 37 und der Leuchtstoffschicht 39 im Rahmen der Figuren 5 und 6 Ausgeführte gilt mit Bezug auf die Figur 7 analog.

Das Aufbringen der einzelnen Schichten in den dargestellten Beschichtungen kann mit den üblichen, zum Aufbringen der von Wärmedämmbeschichtungen bekannten Verfahren erfolgen. Das Einbringen von Aktivatoren in die thermographischen Leuchtstoffe kann durch Dotieren von Wirtsschichten (YAG, YSZ, GZO, usw.) mit wenigstens einem Aktivatormaterial (Tm, Dy, Sm, usw.) bspw. durch Diffusion oder Ionenimplantation erfolgen.

Für die Materialien des thermographischen Leuchtstoffes gilt, dass die charakteristischen Abklingzeiten ihrer Emissionsstrahlung im Temperaturbereich, in dem die Turbinenschaufeln betrieben werden, vorzugsweise nicht größer als ca. 200 Mikrosekunden und insbesondere kleiner 150 Mikrosekunden sein sollen. Dadurch kann gewährleistet werden, dass eine Temperaturmessung innerhalb der Zeitdauer, in der sich die Turbinenschaufel 3 im Sichtbereich des radialen Sichtrohrs 31 befindet (vgl. Fig. 3), möglich ist. Von besonderem Interesse sind hierbei die Abklingzeiten im Temperaturbereich zwischen 1100 und 1400°C. Typische Rotationsgeschwindigkeiten sind 3600 Umdrehungen/Minute. Bei beispielsweise 80 Turbinenschaufeln, die um den Umfang eine Turbine verteil sind, bewegt sich eine Turbinenschaufel innerhalb von 46 Mikrosekunden um 1 Grad. Etwa 4 ½ Grad des Kreises, auf dem sich eine Turbinenschaufel bewegt, können mit der in Fig. 3 dargestellten Anordnung eingesehen werden. Die Zeitspanne zum Durchführen einer Temperaturmessung beträgt damit ca. 200 Mikrosekunden.

Obwohl die Ausführungsbeispiele der Erfindung auf die Messung der Temperatur einer Turbinenschaufel bezogen sind, kann die Erfindung auch dazu verwendet werden, die Temperatur anderer Turbinenbauteile, die sich im Heißgaspfad der Gasturbine befinden und die mit einer keramischen Wärmedämmbeschichtung versehen sind, zu ermitteln. Denkbar ist beispielsweise, die Temperatur von mit keramischen Wärmedämmbeschichtungen versehenen Brennkammerauskleidungen zu messen. Da diese stationär sind, entfallen hierbei die Restriktionen, welche für die Turbinenschaufel aufgrund ihrer Rotation vorhanden sind.

Grundsätzlich sind die beschriebene Vorrichtung, das beschriebene Verfahren und die beschriebene keramische Wärmedämmbeschichtung auch für Bauteile geeignet möglich, die keine Gasturbinenbauteile sind. Denkbar wären beispielsweise Elemente von Brennöfen.

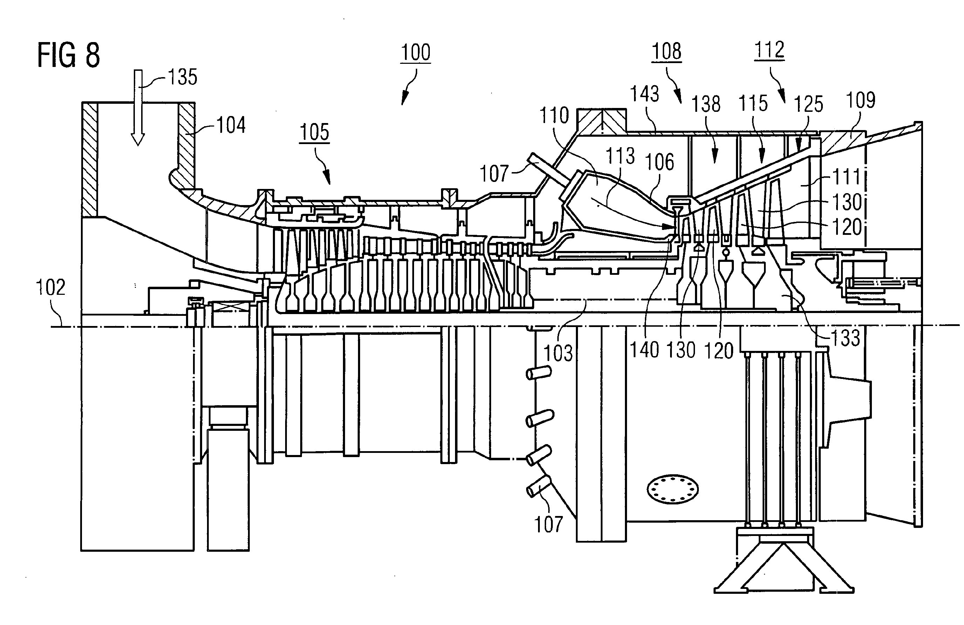

Die Figur 8 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

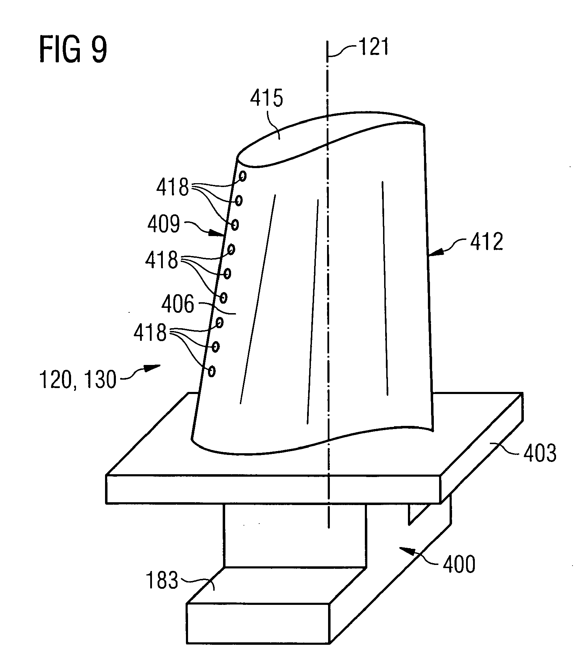

Die Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

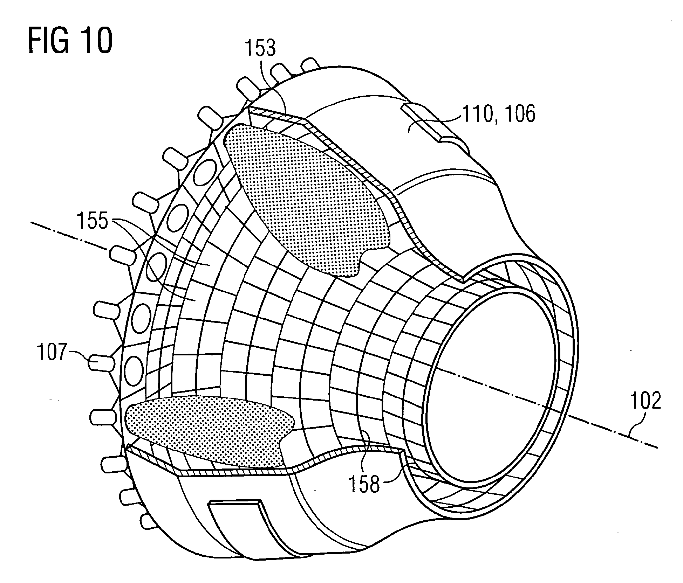

Die Figur 10 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Keramische Wärmedämmbeschichtung,
welche mindestens eine Wärmedämmschicht (37) und eine einen thermographischen Leuchtstoff enthaltende Leuchtstoffschicht (39) umfasst,
wobei der thermographische Leuchtstoff ausgewählt ist aus der Gruppe: YAG:Tm, YAG:EU, YSZ:Dy, GZO:Dy, GZO:Tm, YAG:Sm, EZO.

2. Keramische Wärmedämmbeschichtung nach Anspruch 1,
in welcher die Leuchtstoffschicht (39) über der Wärmedämmschicht (37) angeordnet ist.

3. Keramische Wärmedämmbeschichtung nach Anspruch 1,
in welcher die Leuchtstoffschicht (39) unter der Wärmedämmschicht (37) angeordnet ist.

4. Keramische Wärmedämmbeschichtung nach Anspruch 1,
in welcher zwei Wärmedämmschichten (37a, 37b) vorhanden sind und die Leuchtstoffschicht (39) zwischen den beiden Wärmedämmschichten (37a, 37b) angeordnet ist.

5. Keramische Wärmedämmbeschichtung nach einem der vorangehenden Ansprüche,
in welcher die Wärmedämmschicht (37) ein Material umfasst, das ausgewählt ist aus der Gruppe: YSZ, GZO, GHO.

6. Turbinenbauteil (3) mit einer Wärmedämmbeschichtung (37, 39) nach einem der Ansprüche 1 bis 5.

7. Verwendung von EZO, YAG:Tm, YAG:EU, YSZ:Dy, GZO:Dy, GZO:Tm oder YAG:Sm zum Herstellen einer thermographischen Leuchtstoffschicht (39) in einer Wärmedämmbeschichtung.

8. Vorrichtung (1) zum Messen der Temperatur eines mit einer einen thermographischen Leuchtstoff umfassenden keramischen Wärmedämmbeschichtung beschichteten Turbinenbauteils (3),
welche umfasst:
- eine derart ausgestaltete Strahlungsquelle (5), dass sie eine Anregungsstrahlung (33) aussendet, die geeignet ist, den thermographischen Leuchtstoff in der Wärmedämmbeschichtung des Turbinenbauteils (3) zum Emittieren einer mit einer bestimmten temperaturabhängigen Abklingzeit abklingenden Emissionsstrahlung (34) anzuregen,
- eine Einrichtung (19) zum Leiten der von der Strahlungsquelle (5) ausgesandten Anregungsstrahlung (33) zum Turbinenbauteil (3),
- einen Detektor (11) zum Detektieren der vom angeregten thermographischen Leuchtstoff in der Wärmedämmbeschichtung ausgehenden Emissionsstrahlung (34) und
- eine Auswerteeinheit (17), die dazu ausgestaltet ist, aus dem Abklingverhalten der detektierten Emissionsstrahlung (34) die Temperatur des mit der Anregungsstrahlung (33) bestrahlten Bereiches der Wärmedämmbeschichtung zu ermitteln,
**gekennzeichnet durch**
eine Positioniereinrichtung (23) zum Positionieren der Anregungsstrahlung (33) auf der Oberfläche des Turbinenbauteils (3).

9. Vorrichtung (1) nach Anspruch 8,
**dadurch gekennzeichnet,**
**dass** Positioniereinrichtung wenigstens einen beweglichen Spiegel (23) umfasst.

10. Vorrichtung (1) nach Anspruch 8 oder 9,
**dadurch gekennzeichnet,**
**dass** der Detektor (11) einen Photomultiplier umfasst.

11. Vorrichtung (1) nach einem der Ansprüche 8 bis 10,
**dadurch gekennzeichnet, dass**
der Detektor (11) einen CCD-Kamera oder eine CMOS-Kamera aufweist.

12. Vorrichtung (1) nach einem der Ansprüche 8 bis 11,
**dadurch gekennzeichnet,**
**dass** die Strahlungsquelle ein Laser (5) ist.

13. Vorrichtung (1) nach Anspruch 12,
**dadurch gekennzeichnet, dass**
der Laser ein Festkörperlaser (5) ist.

14. Vorrichtung (1) nach einem der Ansprüche 8 bis 13,
**dadurch gekennzeichnet, dass**
die Einrichtung zum Leiten der von der Strahlungsquelle (5) ausgesandten Anregungsstrahlung (33) zum Turbinenbauteil (3) eine Lichtleitfaser (19) oder ein Lichtleitfaserbündel ist.

15. Vorrichtung (1) nach einem der Ansprüche 8 bis 14,
**dadurch gekennzeichnet, dass**
eine zusätzliche Lichtleitfaser (21) oder ein zusätzliches Lichtleitfaserbündel vorhanden ist, das derart angeordnet ist, dass es in die zusätzliche Lichtleitfaser (21) bzw. in das zusätzliche Lichtleitfaserbündel eintretende Emissionsstrahlung (34) zum Detektor (11) leitet.

16. Verfahren zum Ermitteln der Temperatur eines Turbinenbauteils (3) mit einer einen thermographischen Leuchtstoff umfassenden keramischen Wärmedämmbeschichtung, in welchem
- die Wärmedämmbeschichtung mit einer Anregungsstrahlung (33) bestrahlt wird, die geeignet ist, den thermographischen Leuchtstoff in der Wärmedämmbeschichtung des Turbinenbauteils (3) zum Emittieren einer mit einer bestimmten temperaturabhängigen Abklingzeit abklingenden Emissionsstrahlung (34) anzuregen,
- die vom thermographischen Leuchtstoff emittierte Emissionsstrahlung (34) detektiert wird,
- die detektierte Emissionsstrahlung (34) unter Berücksichtigung ihres zeitliches Abklingverhaltens analysiert wird und
- die Temperatur des mit der Anregungsstrahlung (33) bestrahlten Bereiches der Wärmedämmbeschichtung auf der Basis des Abklingverhaltens der Emissionsstrahlung (34) ermittelt wird,
**dadurch gekennzeichnet, dass**
die Oberfläche der Wärmedämmbeschichtung mit der Anregungsstrahlung (33) gescannt wird.

17. Verfahren nach Anspruch 16,
in dem das Turbinenbauteil (3) Teil eines rotierenden Rotors ist,
**dadurch gekennzeichnet, dass**
in jeder n-ten Rotationsperiode mit n ≥ 1 ein anderer Bereich der Oberfläche der Wärmedämmbeschichtung mit Anregungsstrahlung bestrahlt wird.

18. Verfahren nach Anspruch 16 oder 17,
**dadurch gekennzeichnet, dass**
das Bestrahlen der Wärmedämmbeschichtung mit der Anregungsstrahlung (33) gepulst erfolgt.

19. Verfahren nach einem der Ansprüche 16 bis 18,
**dadurch gekennzeichnet, dass**
das Bestrahlen der Wärmedämmbeschichtung mit Anregungsstrahlung (33) im ultravioletten Wellenlängenbereich erfolgt.
